# EUROPÄISCHE PATENTANMELDUNG

(11) **EP 1 779 714 A1**
(43) Veröffentlichungstag der Anmeldung: **02.05.2007**
(21) Anmeldenummer: 06021484.8
(22) Anmeldetag: 13.10.2006
(51) Int. Cl.: A01C 7/10

(54) **Vorrichtung zum optischen Zählen kleiner Körperchen**

(30) Priorität: 26.10.2005 DE 102005051505; 28.09.2006 DE 102006046133
(71) Anmelder: Amazonen-Werke H. Dreyer GmbH & Co. KG, 49205 Hasbergen (DE)
(72) Erfinder: Marquering, Johannes, Dr., 49176 Borgloh (DE); Kötter, Heiner, 49086 Osnabrück (DE)

(57) **Zusammenfassung**

Vorrichtung zum optischen Zählen kleiner Körperchen, insbesondere die von einer Sämaschine auszubringenden Saatkörner, bei denen die zu zählenden Körper einen mit optischen Sensoren (13) besetzten und in einer Förderleitung (8) angeordneten Messraum (15) passieren und dabei den Lichtgang zwischen einem Lichtemitter (17) und einem Lichtdetektor (18) der Sensoren (13) unterbrechen, wobei die Förderleitung (8) vor und hinter dem Messraum (15) einen kreisrunden Querschnitt aufweist, wobei der Messraum (15) einen rechteckigen, vorzugsweise quadratischen Querschnitt aufweist, wobei die Wände des Messraumes (15) von lichtdurchlässigen und planen und/oder ebenen Scheiben (23) gebildet werden. Um in einfacher Weise zu erreichen, dass die lichtdurchlässigen Scheiben (23) des Messraumes (15) nicht durch sich in der Förderluft oder im geförderten Saatgutstrom befindlichen Schmutzpartikel verschmutzt werden, ist vorgesehen, dass der jeweilige Übergang vom runden auf den rechteckigen Querschnitt und vom rechteckigen auf den runden Querschnitt ohne Stufen im kontinuierlicher Weise erfolgt.

## Beschreibung

Die Erfindung betrifft eine Vorrichtung zum optischen Zählen kleiner Körperchen gemäß des Oberbegriffes des Patentanspruches 1, der auch als Körnerzähler bezeichnet werden kann.

Ein derartiger Körnerzähler ist in der Praxis bekannt geworden. Der Messraum dieses Körnerzählers erweitert sich schlagartig gegenüber der Förderleitung. Durch die plötzliche große Erweiterung entstehen Luftverwirbelungen im Bereich des Messraumes. Durch diese Luftverwirbelungen lagern sich die im Förderluf.tstrom befindlichen Schmutzpartikel vor den lichtdurchlässigen Scheiben ab und verschmutzen diese, so dass der von dem Lichtemitter ausgesandte Lichtstrahl, beispielsweise ein Laserstrahl nicht in ausreichender Weise durch die Schmutzschicht durchdringen kann.

Der Erfindung liegt die Aufgabe zugrunde, in einfacher Weise zu erreichen, dass die lichtdurchlässigen Scheiben des Messraumes nicht durch sich in der Förderluft oder im geförderten Saatgutstrom befindlichen Schmutzpartikel verschmutzt werden.

Diese Aufgabe wird in erfindungsgemäß durch die kennzeichnenden Merkmal des Anspruches 1 gelöst.

Infolge dieser Maßnahmen bleibt eine laminiare Strömung, ohne dass Luftverwirbelungen des Förderluftstromes entstehen, im Bereich des Messraumes erhalten. Somit lagern sich keine Schmutzpartikel an den lichtdurchlässigen Scheiben in der Weise an, dass das durchdringen des Lichtstrahls des Lichtemitters durch den Messraum bis zum Lichtdetektors nicht behindert wird. Vielmehr streicht der Förderluftstrom an den Innenseiten lichtdurchlässigen der Scheiben vorbei und verhindert so ein Verschmutzen der lichtdurchlässigen Scheiben.

In dieser Ausführungsform ist vorgesehen, dass die Wände des Messraumes auf ihrer einander zugewandten Innenseite in einem Abstand zueinander angeordnet sind, der kleiner als der Durchmesser der Förderleitung ist.

Infolge dieser Maßnahme wird erreicht, dass sich der Messraum gegenüber den Förderleitungen nicht erweitert. Hierdurch werden Luftverwirbelungen des Förderluftstromes im Bereich des Messraumes vermieden. Der Förderluftstrom streicht an der Innenseite der Scheiben vorbei und verhindert so ein verschmutzen der lichtdurchlässigen Scheiben in der Weise, dass sicher gestellt ist, dass der Lichtstrahl des Lichtemitters den Messraum bis zum Lichtdetektor durchdringen kann. Als besonders vorteilhaft hat sich nach Versuchen in überraschender Weise herausgestellt, dass die Querschnittsfläche des Messraumes zumindest annähernd gleich der Querschnittsfläche,der kreisrunden Förderleitung ist.

In einer weiteren Ausführung ist vorgesehen, dass die Wände des Messraumes auf ihrer einander zugewandten Seite in einem Abstand zueinander angeordnet sind, der zumindest annähernd dem Innendurchmesser der Förderleitung entspricht. Infolge dieser Maßnahme wird ebenfalls eine laminare Strömung innerhalb des Messraumes gewährleistet, so dass sich ebenfalls keine Verschmutzungen an der Innenseite der lichtdurchlässigen Scheiben anlagern.

Um in einfacher Weise zu erreichen, dass der Querschnitt der Förderleitung zumindest annähernd gleich der Querschnittsfläche der kreisrunden Förderleitung ist und dieser Übergang kontinuierlich erfolgt, ist vorgesehen, dass zwischen dem Messraum und den Förderleitungen ein sich von kreisrund auf quadratisch oder rechteckig verändernder Übergangstrichter angeordnet ist.

Um bei dem Übergang von dem kreisrunden Querschnitt auf den rechteckigen Querschnitt im Bereich des Messraumes und wieder auf den kreisrunden Querschnitt der weiterführenden Förderleitung die Vermeidung des Entstehens von Verwirbelungen zu erreichen, ist vorgesehen, dass die Wände des Übergangstrichters einen Winkel von etwa 5° zur Strömungsrichtung einschließen.

Um sicher zu stellen, dass aus dem Bereich der Förderleitung bzw. des Messraumes keine Schmutzpartikel an den Lichtemitter bzw. Lichtdetektor der Sensoren gelangen, ist vorgesehen, dass die lichtdurchlässigen Scheiben abdichtend in einem den Messraum aufweisenden Gehäuse angeordnet sind.

Eine besonders vorteilhafte Ausgestaltung der lichtdurchlässigen Scheiben im Bereich des Messraumes und deren Montage und Anordnung in abdichtender Weise im Gehäuse, lässt sich dadurch erreichen, dass die den Messraum umschließenden lichtdurchlässigen Scheiben einstückig ausgebildet sind.

Eine kompakte Bauweise der Vorrichtung lässt sich dadurch erreichen, dass die Lichtdetektoren der Sensoren abgedichtet und unmittelbar hinter den lichtdurchlässigen Scheiben angeordnet sind. Hierdurch können die lichtdurchlässigen Scheiben gleichzeitig als Schutz- und Abdichtungselement für die Sensoren dienen.

Weiterhin ist vorgesehen, dass die Lichtemitter der Sensoren abgedichtet und unmittelbar hinter den lichtdurchlässigen Scheiben angeordnet sind. Hierdurch ergibt sich ebenfalls eine kompakte Bauweise, da die Lichtemitter direkt den lichtdurchlässigen Scheiben zugeordnet sind.

Besonders kompakt lässt sich die Vorrichtung dadurch bauen, dass sowohl die Lichtdetektoren der Sensoren, wie die Lichtemitter der Sensoren unmittelbar hinter den lichtdurchlässigen Scheiben angeordnet sind, bzw. die lichtdurchlässigen Scheiben gleichzeitig den Lichtdetektoren und Lichtemittern zugeordnet sind.

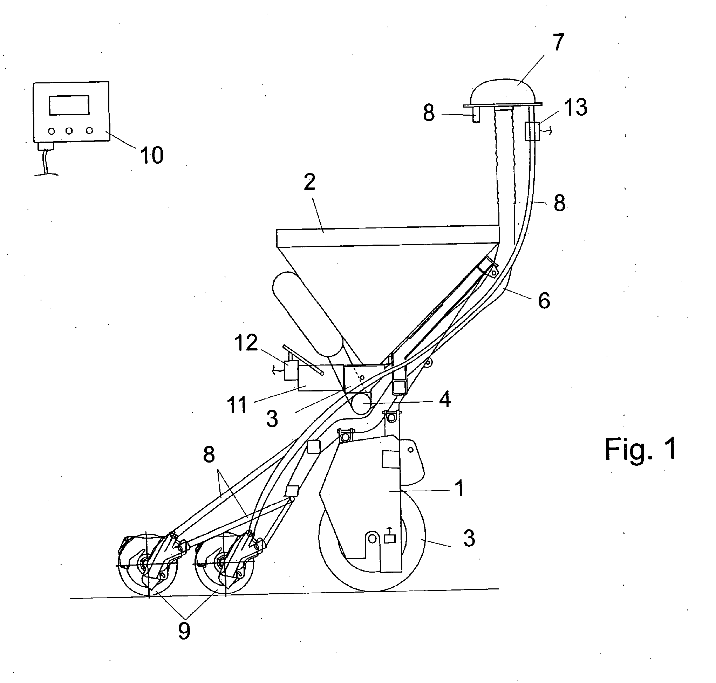

Weitere Einzelheiten der Erfindung sind den übrigen Unteransprüchen, der Beispielsbeschreibung und den Zeichnungen zu entnehmen. Hierbei zeigen
- Fig. 1: eine erfindungsgemäß ausgestattete Sämaschine in Prinzipdarstellung,

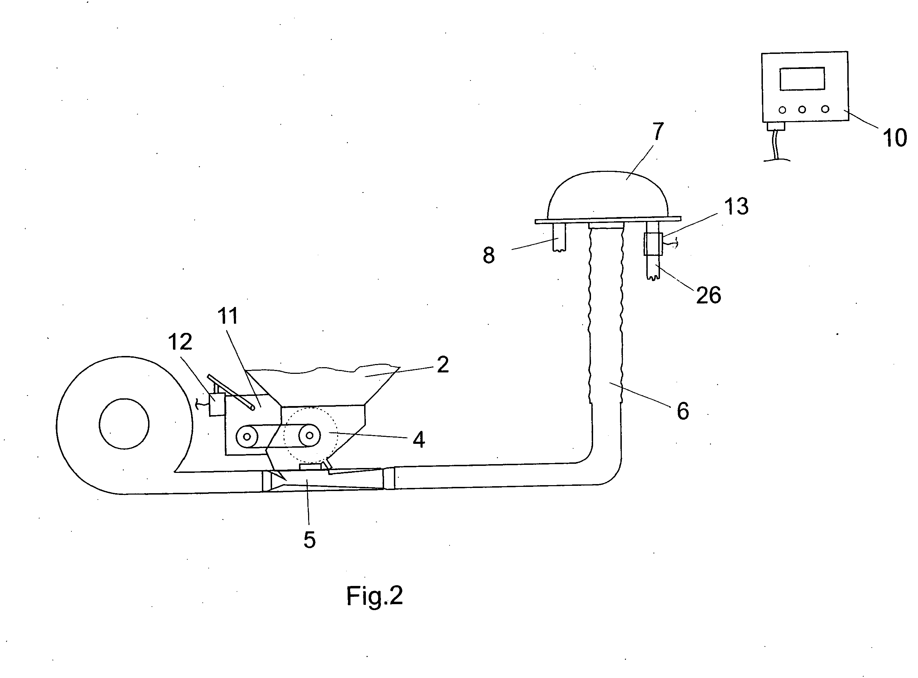

- Fig. 2: die Anordnung des Sensors zum Zählen kleiner Körperchen in Prinzipdarstellung,
- Fig. 3: den erfindungsgemäßen Messraum des Sensors im Schnitt und vergrößerter Darstellung und in Prinzipdarstellung,
- Fig. 4: den Sensor in der,Ansicht IV - IV in Prinzipdarstellung,
- Fig. 5: einen Teil des Übergangstrichters, in welchem die Dichtscheiben und der Messraum sich befinden, in Prinzipdarstellung,
- Fig. 6: den Übergangstrichter mit den lichtdurchlässigen Scheiben des Messraumes in perspektivischer und Explosionsdarstellung,
- Fig. 7: einen weiteren erfindungsgemäßen Messraum des Sensors im Schnitt und vergrößerter Darstellung und in Prinzipdarstellung,
- Fig. 8: den Sensor gemäß Fig. 7 in der Ansicht VIII - VIII,
- Fig. 9: einen weiteren erfindungsgemäßen Messraum des Sensors im Schnitt und in vergrößerter Darstellung und in Prinzipdarstellung und
- Fig. 10: den Sensor gemäß Fig. 9 in der Draufsicht X - X in Prinzipdarstellung.

Die Sämaschine ist als pneumatische Verteilmaschine ausgebildet. Sie weist einen Rahmen 1 und Vorratsbehälter 2 auf. Der Rahmen 1 stützt sich auf Laufrädern 3 oder einer Bodenwalze auf dem Boden ab. Dem Vorratsbehälter 2 ist ein Zentraldosierer 4 zugeordnet, der das sich im Vorratsbehälter 2 befindliche Saatgut über eine Schleuse 5 in eine zentrale Zuführleitung 6, die als Steigrohr ausgebildet ist, einleitet. Dieses Steigrohr 6 mündet an seinem oberen Ende in einem Verteilerkopf 7, über den das dosierte Saatgut auf die einzelnen sich an dem Verteilerkopf anschließenden Saatleitungen 8 aufgeteilt wird. Die Saatleitungen 8 führen zu den am Rahmen 1 angelenkten Säscharen 9. Dem Laufrad 3 ist eine Wegstreckenmesseinrichtung zugeordnet, die Messdaten an eine als Bordcomputer 10 ausgebildete elektronische Auswerteeinheit übermittelt. Der Dosierer 4 wird über einen Antriebsstrang und ein einstellbares Getriebe 11 von einer Kraftquelle angetrieben. Das Getriebe 11 wird über einen Einstellmotor 12 eingestellt und von dem Bordcomputern 10 angesteuert.

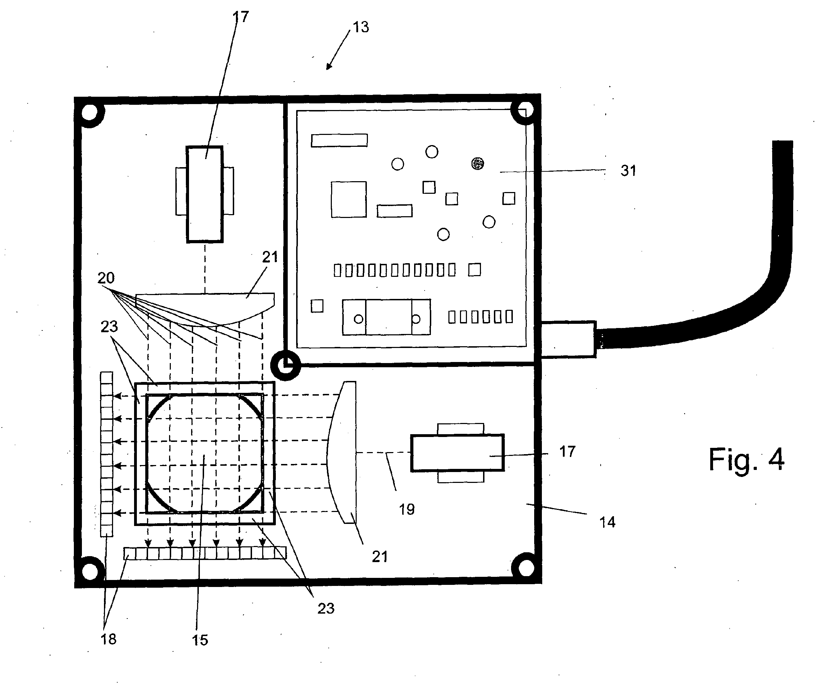

Zumindest einer der Saatleitungen 8 ist eine Vorrichtung 13 zum optischen Zählen kleiner Körperchen, die als Körnerzählsensor 13 ausgebildet ist, zugeordnet. Der Sensor 13 ist in der Saatleitung 8 angeordnet und weist das Gehäuse 14 auf. In dem Gehäuse 14 befindet sich ein Messraum 15, den die in der Förderleitung 8 geförderten Saatkörner 16 passieren. Der Sensor 13 weist zumindest einen Lichtemitter 17 und zumindest einen Lichtdetektor 18 auf, wobei der Lichtdetektor 18 als CCD-Zeile oder Zeilenkamera ausgebildet ist. Der Lichtemitter 17 ist als Laserlichtquelle ausgebildet. Hierbei ist der jeweiligen Laserlichtquelle 17 eine den Laserlichtstrahl 19 breit auffächernde und parallele Lichtstrahlen 20 erzeugende Linse 21 angeordnet. Insgesamt weist der Sensor 13 zwei um 90° versetzt Lichtdetektoren 18 und Lichtemitter 17 auf, wie Fig. 4 zeigt. Die Lichtemitter 17 und Lichtdetektoren 18 der Sensoren 13 sind beabstandet zu der Kontur der Wände 22 des Messraumes 15 angeordnet. Die Wände 22 des Messraumes sich als lichtdurchlässige Scheiben 23 ausgebildet. Die Lichtemitter 17 und Lichtdetektoren 18 der Sensoren 13 sind abgedichtet hinter beabstandet zu dem lichtdurchlässigen Dichtungsscheiben 23 angeordnet.

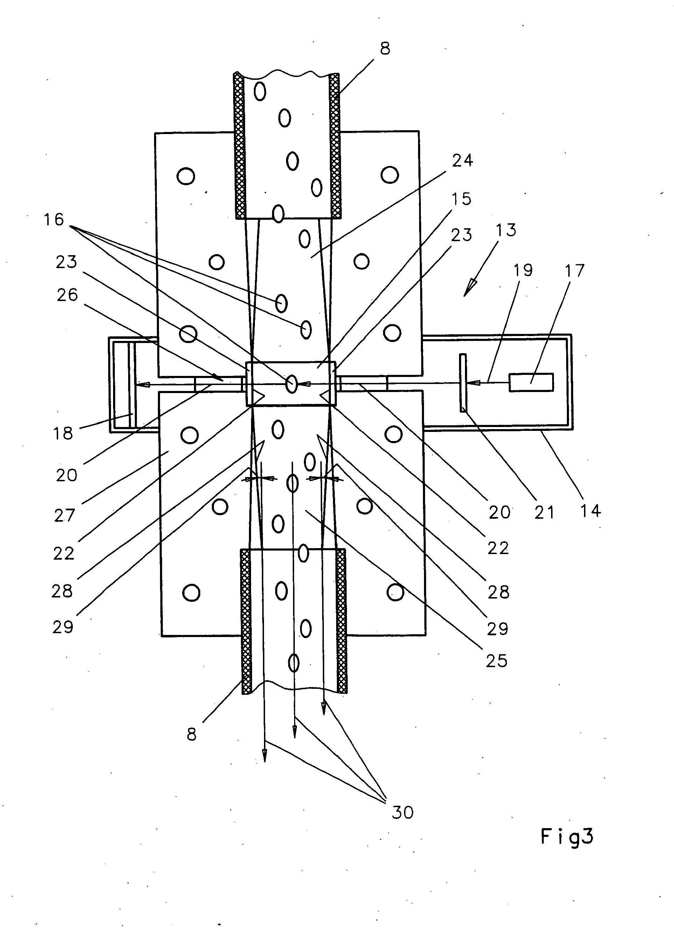

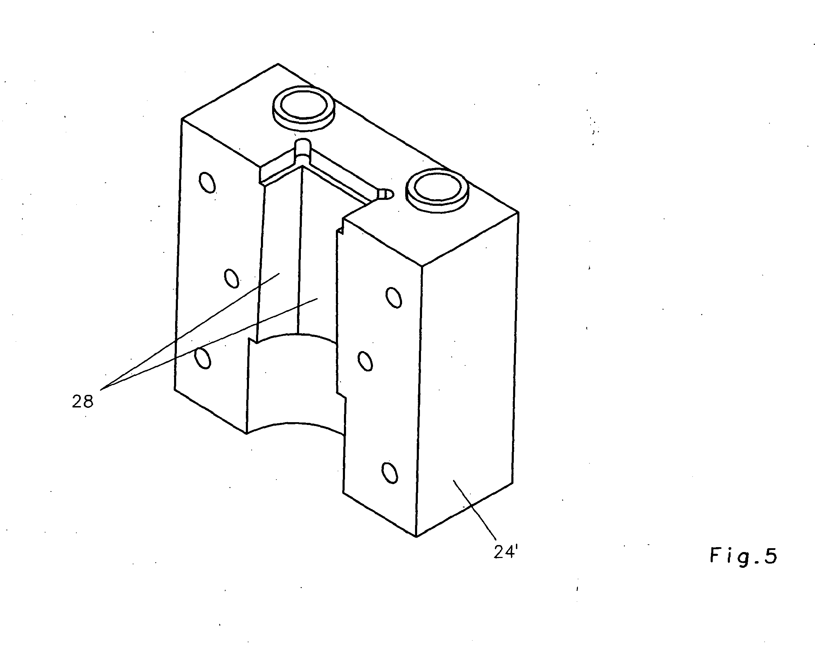

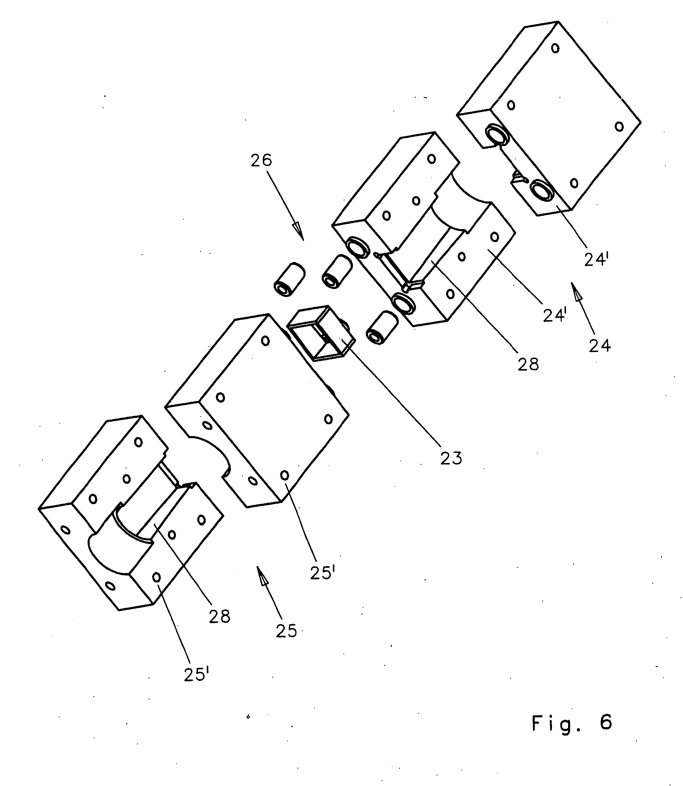

Der Messraum 15 des Sensors 13 befindet sich zwischen zwei Übergangstrichtern 24 und 25 die in der Förderleitung 8 angeordnet sind. Die Übergangstrichter 24, 25 sind jeweils aus zwei Halbschalen 24' und 25' zusammengesetzt. In dem einander anschließenden Bereich 26 der Übergangstrichter 24, 25 befindet sich der Messraum 15, dessen Wände 22 von den lichtdurchlässigen Scheiben 23 gebildet werden. Die lichtdurchlässigen Scheiben 23 sind abdichtend in einem den Messraum 15 aufweisenden Gehäuse 27, in welchem die Übergangstrichter 24, 25 befinden angeordnet. Die den Messraum 15 umschließenden lichtdurchlässigen Scheiben 23 sind einstückig ausgebildet, wie insbesondere der Fig. 6 zu entnehmen ist. Die Förderleitungen 8 weisen einen kreisrunden Querschnitt auf, während der Messraum 15, der von den lichtdurchlässigen Scheiben 23 begrenzt wird, eine quadratischen Querschnitt aufweist, wie die Fig. 4 und 6 zeigen. Die Querschnittsfläche des Messraumes 15 ist zumindest annähernd gleich der Querschnittsfläche der kreisrunden Förderleitung 8. Um dieses zu erreichen sind zwischen den Förderleitungen 8 und dem Messraum 15 die Übergangstrichter 24, 25 angeordnet, dessen Wände 28 einen Winkel 29 von etwa 5° zur Strömungsrichtung 30 einschließen. Die Wände 22 des Messraumes 15, die von den lichtdurchlässigen Scheiben 23 gebildet werden, sind auf ihre einander zugewandten Innenseite in einem Abstand zueinander angeordnet, der kleiner als der Durchmesser der Förderleitung 8 ist. Zwischen dem Messraum 15, der von den lichtdurchlässigen Scheiben 23 gebildet wird, und den Förderleitungen 8 ist jeweils ein sich von kreisrund auf quadratisch oder rechteckig verändernder Übergangstrichter 24, 25 angeordnet, wie die Fig. 3, 5 und 6 zeigen.

Durch die sich nicht oder zumindest nicht wesentlich in ihrer Querschnittsgröße verändernden Querschnittsflächen der Förderleitung 8 zum Messraum und 15 wieder zur Förderleitung 8 wird sichergestellt, dass sich im Bereich des Messraumes 15 bzw. der lichtdurchlässigen Scheiben 23 keine Luftverwirbelungen bilden. Somit lagern sich keine sich im Förderluftstrom oder an den Saatkörnern anhaftenden Schmutzpartikel an der Innenseite der lichtdurchlässigen Scheiben 23 des Messraumes 15 an.

Somit können die von der Linse 21 aufgefächerten Lichtstrahlen 20 des Lasers 17 in ausreichender Weise ungehindert durch die lichtdurchlässigen Scheiben 23 durchtreten und auf die CCD-Zeilen 17 oder Zeilenkamera auftreffen. Durch Unterbrechen der durch den Messraum 15 tretenden Saatkörner 16 wird der Lichtgang unterbrochen. Dieses wird von den CCD-Zeilen 18 oder der Zeilenkamera registriert und an die elektronische Auswertevorrichtung 31 des Körnerzählers 13 mit entsprechenden Signalen weitergeleitet. Aus diesen Signalen lässt sich dann die Anzahl der den Messraum 15 passierenden Körperchen 16 ermitteln. Aufgrund dieser ermittelten Werte steuert der Bordcomputer 10 den Einstellmotor 12 des Dosierers 4 um die gewünschte Ausbringmenge einzustellen.

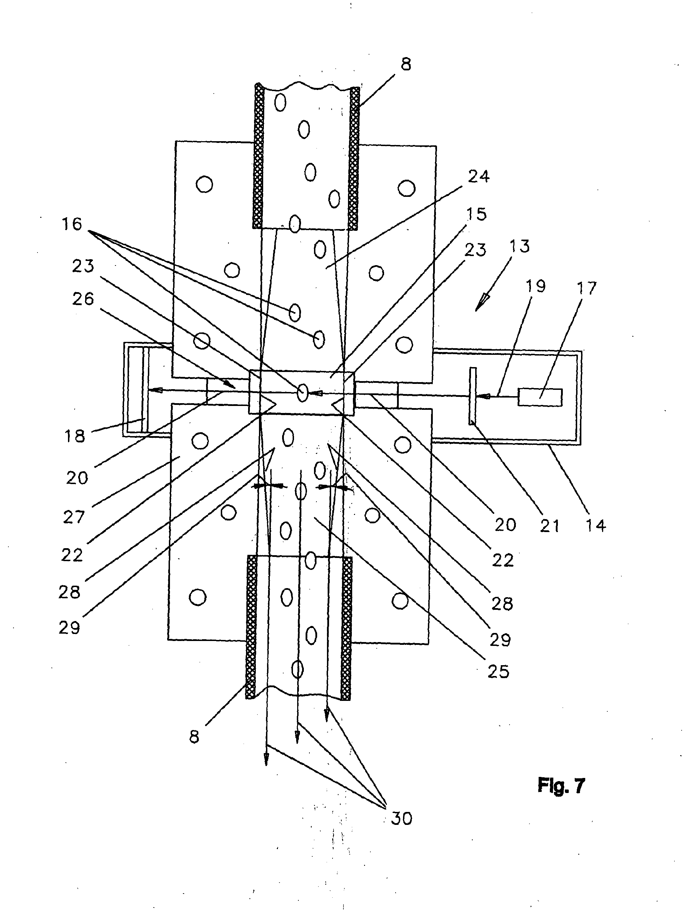

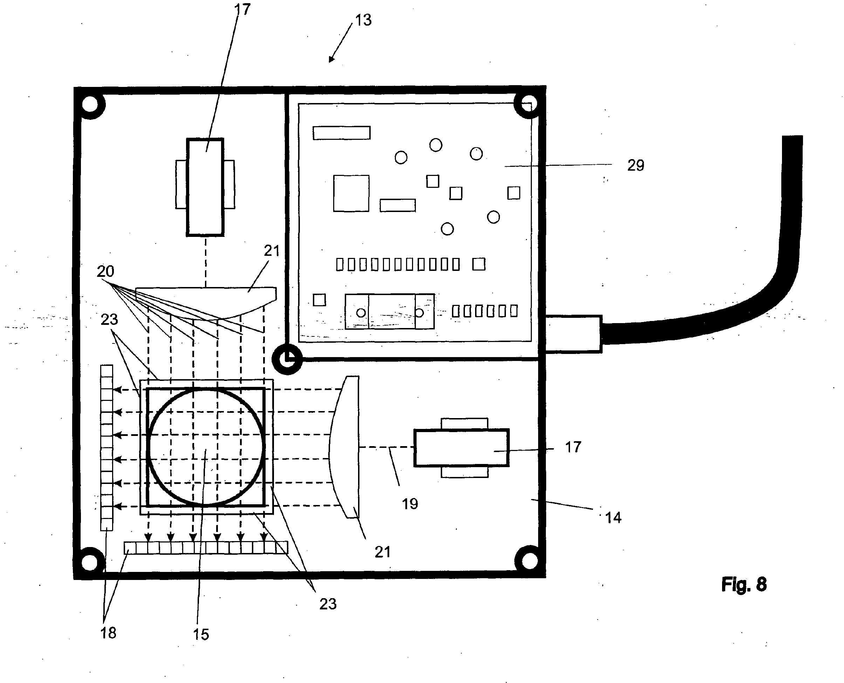

Der Sensor gemäß den Fig. 7 und 8 unterscheidet sich von dem Sensor der Fig. 3 bis 6 dadurch, dass die Wände des Messraumes 15, die von den lichtdurchlässigen Scheiben 23 gebildet werden, auf ihrer einander zugewandten Innenseite in einem Abstand zueinander angeordnet sind, der dem Innendurchmesser der Förderleitungen 8 entspricht. Der jeweilige Übergang vom runden auf den rechteckigen Querschnitt und vom rechteckigen auf den runden Querschnitt erfolgt ohne Stufen in kontinuierlicher Weise, um eine laminare Strömung auch beim Übergang von den Förderleitungen 8 zu dem rechteckigen Messraum 15 und von dem rechteckigen Messraum 15 zu der Förderleitung 8 beizubehalten.

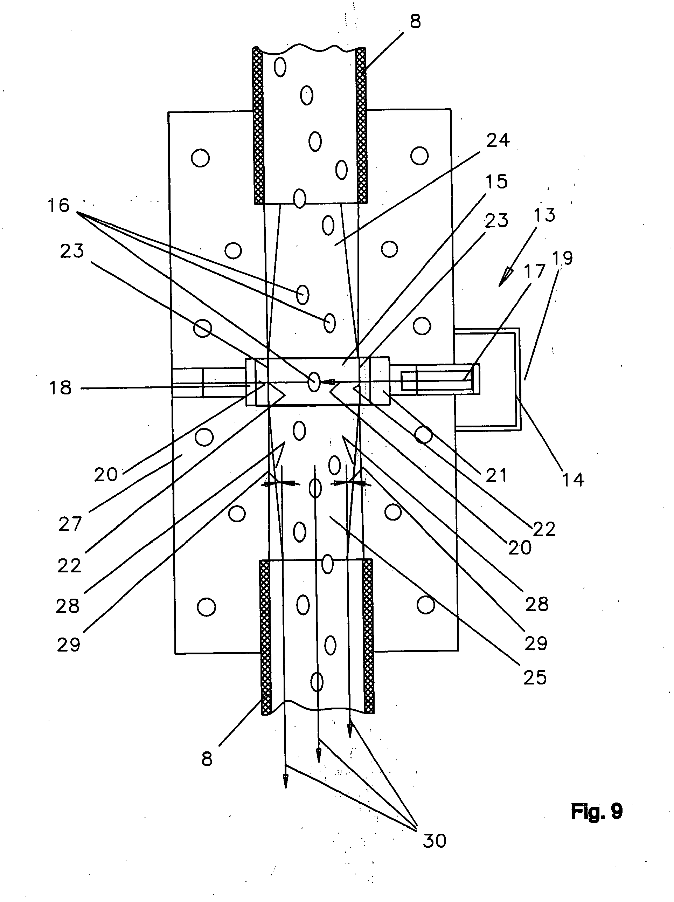

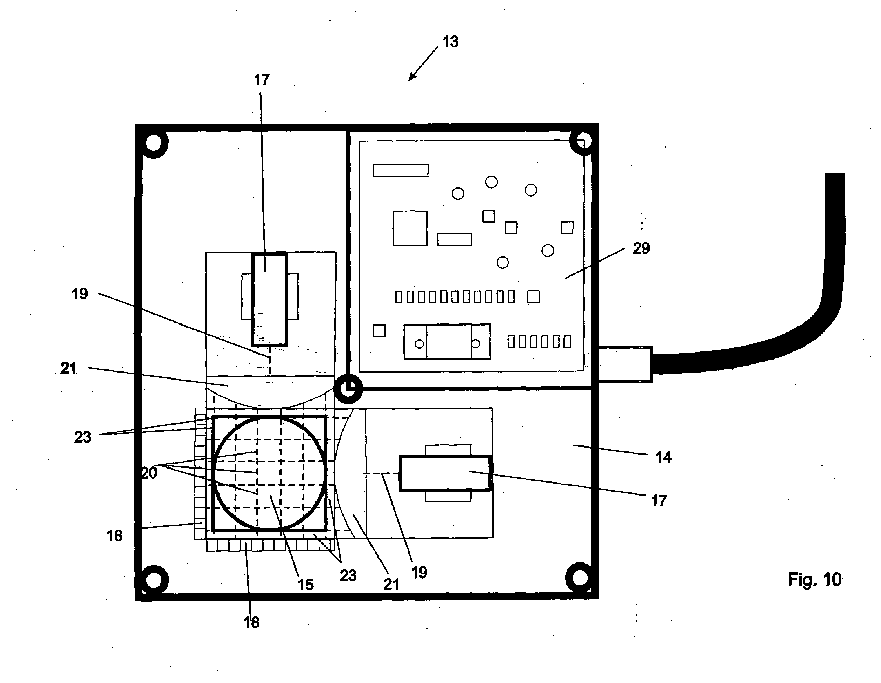

Der Sensor gemäß den Fig. 9 und 10 entspricht von der Ausgestaltung des Messraumes 15 dem Ausführungsbeispiel gemäß den Fig. 7 und 8. Er unterscheidet sich hinsichtlich der Anordnung der Sensoren von den Ausführungsbeispielen gemäß der Fig. 3 bis 8 dadurch, dass die Lichtdetektoren 18 der Sensoren abgedichtet und unmittelbar hinter den lichtdurchlässigen Scheiben 23 angeordnet sind. Weiterhin sind die Lichtemitter 17 der Sensoren mit den den Laserlichtstrahl 19 auffächernden Linsen 21 abgedichtet und unmittelbar hinter den lichtdurchlässigen Scheiben 23 angeordnet, so dass sich eine kompaktere Bauweise und Anordnung der Sensoren ergibt.

## Patentansprüche

1. Vorrichtung zum optischen Zählen kleiner Körperchen, insbesondere die von einer Sämaschine auszubringenden Saatkörner, bei denen die zu zählenden Körper einen mit optischen Sensoren besetzten und in einer Förderleitung angeordneten Messraum passieren und dabei den Lichtgang zwischen einem Lichtemitter und einem Lichtdetektor der Sensoren unterbrechen, wobei die Förderleitung vor und hinter dem Messraum einen kreisrunden Querschnitt aufweist, **dadurch gekennzeichnet, dass** der Messraum (15) einen rechteckigen, vorzugsweise quadratischen Querschnitt aufweist, dass die Wände des Messraumes (15) von lichtdurchlässigen und planen und/oder ebenen Scheiben (23) gebildet werden, dass der jeweilige Übergang vom runden auf den rechteckigen Querschnitt und vom rechteckigen auf den runden Querschnitt ohne Stufen im kontinuierlicher Weise erfolgt.

2. Vorrichtung nach Anspruch 1, **dadurch gekennzeichnet, dass** die Wände (23) des Messraumes (15) auf ihrer einander zugewandten Innenseite (22) in einem Abstand zueinander angeordnet sind, der kleiner als der Durchmesser der Förderleitung (8) ist.

3. Vorrichtung nach Anspruch 1, **dadurch gekennzeichnet, dass** die Querschnittsfläche des Messraumes (15) zumindest annähernd gleich der Querschnittsfläche der kreisrunden Förderleitung (8) ist.

4. Vorrichtung nach Anspruch 1, **dadurch gekennzeichnet, dass** die Wände (23) des Messraumes (15) auf ihrer einander zugewandten Innenseite in Abstand zueinander angeordnet sind, der zumindest annähernd dem Innendurchmesser der Förderleitung (8) entspricht.

5. Vorrichtung nach Anspruch 1, **dadurch gekennzeichnet, dass** die Wände (23) des Messraumes (15) auf ihrer einander zugewandten Innenseite in Abstand zueinander angeordnet sind, der dem Innendurchmesser der Förderleitung (8) entspricht.

6. Vorrichtung nach Anspruch 1, **dadurch gekennzeichnet, dass** zwischen dem Messraum (15) und den Förderleitungen (8) ein sich von kreisrund auf quadratisch oder rechteckig verändernder Übergangstrichter (24, 25) angeordnet ist.

7. Vorrichtung nach Anspruch 3, **dadurch gekennzeichnet, dass** die Wände des Übergangstrichters (24, 25) einen Winkel (29) von etwa 5 Grad zur Strömungsrichtung (30) einschließen.

8. Vorrichtung nach einem oder mehreren der vorstehenden Ansprüche, **dadurch gekennzeichnet, dass** die lichtdurchlässigen Scheiben (23) abdichtend in einem den Messraum (15) aufweisenden Gehäuse (27) angeordnet sind.

9. Vorrichtung nach einem oder mehreren der vorstehenden Ansprüche, **dadurch gekennzeichnet, dass** die den Messraum (15) umschließenden lichtdurchlässigen Scheiben (23) einstückig ausgebildet sind.

10. Vorrichtung nach einem oder mehreren der vorstehenden Ansprüche, **dadurch gekennzeichnet, dass** die Lichtemitter (17) und Lichtdetektoren (18) der Sensoren (13) abgedichtet und beabstandet hinter den lichtdurchlässigen Scheiben (23) angeordnet sind.

11. Vorrichtung nach Anspruch 9, **dadurch gekennzeichnet, dass** die Lichtdetektoren (18) der Sensoren abgedichtet und unmittelbar hinter den lichtdurchlässigen Scheiben (23) angeordnet sind.

12. Vorrichtung nach einem oder mehreren der Ansprüche 1 bis 9, **dadurch gekennzeichnet, dass** die Lichtemitter (17) der Sensoren abgedichtet und unmittelbar hinter den lichtdurchlässigen Scheiben (23) angeordnet sind.
